# EUROPÄISCHE PATENTSCHRIFT

(11) **EP 2 914 992 B1**
(45) Veröffentlichungstag und Bekanntmachung des Hinweises auf die Patenterteilung: **26.12.2018**
(21) Anmeldenummer: 13780106.4
(22) Anmeldetag: 16.10.2013
(51) Int. Cl.: G02B 6/38

(54) **STECKVERBINDERVORRICHTUNG**
PLUG CONNECTOR DEVICE
DISPOSITIF DE CONNEXION ENFICHABLE

(30) Priorität: 30.10.2012 DE 102012110371
(43) Veröffentlichungstag der Anmeldung: 09.09.2015
(73) Patentinhaber: Reichle & De-Massari AG, 8620 Wetzikon (CH)
(72) Erfinder: SCHULTHESS, Harold Frederico, 5105 Villa Allende Cordoba (AR); LEUENBERGER, Gino, CH-8630 Rueti (CH); BÄRTSCHI, Felix, CH-8712 Stäfa (CH)
(74) Vertreter: Daub, Thomas
(86) Internationale Anmeldenummer: PCT/EP2013/071584
(87) Internationale Veröffentlichungsnummer: WO 2014/067778

(56) Entgegenhaltungen:
- EP-A1- 0 814 353
- EP-A1- 2 312 353
- US-A- 5 909 528
- US-A1- 2006 104 590

## Beschreibung

### Stand der Technik

Die Erfindung betrifft eine Steckverbindervorrichtung nach dem Oberbegriff des Anspruchs 1.

Aus der EP 0 846 965 B1 ist eine Steckverbindervorrichtung für einen feldkonfektionierbaren optischen Steckverbinder bekannt, welche eine zweiteilige Spleißeinheit zur mechanischen Spleißung zweier optischer Fasern und eine die Spleißeinheit zumindest teilweise umgebende C-förmige Federklemme umfasst. Ein separates keilförmiges Betätigungselement ist dazu vorgesehen, die Federklemme entgegen einer Federkraft zu öffnen.

US 5,909,528 offenbart eine Steckverbindervorrichtung nach dem Oberbegriff des Anspruchs 1.

Die Aufgabe der Erfindung besteht insbesondere darin, eine gattungsgemäße Steckverbindervorrichtung mit vorteilhaften Eigenschaften hinsichtlich einer Konfektionierbarkeit wenigstens eines optischen Faserendes bereitzustellen. Die Aufgabe wird erfindungsgemäß durch die kennzeichnenden Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Steckverbindervorrichtung, insbesondere für einen feldkonfektionierbaren optischen Steckverbinder, mit zumindest einer Spleißeinheit, welche dazu vorgesehen ist, eine mechanische Spleißung wenigstens zweier optischer Fasern herzustellen, und mit zumindest einer Federklemme zur Fixierung der wenigstens zwei optischen Fasern in der zumindest einen Spleißeinheit in einer Spleißposition durch zumindest eine Federkraft.

Es wird vorgeschlagen, dass die Steckverbindervorrichtung wenigstens ein in einem montierten Zustand und in einer Schließstellung der zumindest einen Federklemme unverlierbares Betätigungselement umfasst, welches dazu vorgesehen ist, die zumindest eine Federklemme entgegen der Federkraft wenigstens teilweise zu öffnen. Unter einer "Steckverbindervorrichtung" soll hier und im Folgenden insbesondere ein Teil eines Steckverbinders, insbesondere eines Steckers und vorzugsweise eines SC-, LSH- oder LC-Steckers verstanden werden. Unter einem "feldkonfektionierbaren optischen Steckverbinder" soll insbesondere ein optischer Steckverbinder verstanden werden, welcher eine Konfektionierung zumindest eines freien optischen Faserendes unter Feldbedingungen gestattet. Hierbei wird das zumindest eine freie optische Faserende mittels einer mechanischen Spleißung mit wenigstens einem Faserstummel verbunden, welcher insbesondere mit einer Ferrule vorkonfektioniert ist, wobei eine Vorkonfektionierung insbesondere unter kontrollierten Bedingungen und vorzugsweise durch Fachpersonal stattfinden kann. Unter einer "mechanischen Spleißung" soll in diesem Zusammenhang insbesondere eine insbesondere reversible optische Kopplung von wenigstens zwei, insbesondere entlang einer Geraden angeordneten optischen Fasern verstanden werden, deren Enden mittels einer Spleißeinheit insbesondere derart fixiert sind, dass sie sich bei hergestellter mechanischer Spleißung zumindest im Wesentlichen berühren. Darunter, dass Enden von optischen Fasern sich "zumindest im Wesentlichen berühren", soll insbesondere verstanden werden, dass ein Abstand der Enden höchstens 15 µm, insbesondere maximal 10 µm, vorzugsweise höchstens 5 µm und besonders vorteilhaft maximal 1 µm beträgt.

Unter einer "Spleißeinheit" soll insbesondere eine Einheit verstanden werden, welche zumindest ein Spleißelement mit wenigstens einer Faserführungsstruktur umfasst, welche zu einer zumindest teilweisen Fixierung wenigstens einer optischen Faser bei hergestellter mechanischer Spleißung vorgesehen ist. Unter "vorgesehen" soll insbesondere speziell ausgelegt und/oder ausgestattet verstanden werden. Unter einer "Faserführungsstruktur" eines Spleißelements soll in diesem Zusammenhang insbesondere eine Struktur, insbesondere eine Oberflächenstruktur, des Spleißelements verstanden werden, welche zu einer wenigstens teilweisen Aufnahme zumindest einer optischen Faser vorgesehen ist. Vorzugsweise ist die wenigstens eine Faserführungsstruktur zumindest teilweise als eine Nut ausgebildet, welche besonders vorteilhaft zumindest abschnittsweise einen zumindest im Wesentlichen dreieckigen, insbesondere gleichschenklig dreieckigen, Querschnitt aufweist. Unter einem "zumindest im Wesentlichen dreieckigen Querschnitt" soll in diesem Zusammenhang insbesondere ein Querschnitt verstanden werden, welcher sich mit einem Flächenanteil von höchstens 40 %, insbesondere von maximal 30 %, vorzugsweise von höchstens 20 % und besonders vorteilhaft von maximal 10 % von einer Dreieckform unterscheidet. Vorzugsweise ist eine Haupterstreckungsrichtung der wenigstens einen Faserführungsstruktur, insbesondere der Nut, zumindest im Wesentlichen parallel zu einer Haupterstreckungsrichtung der zumindest einen Spleißeinheit. Unter "zumindest im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung von höchstens 10°, insbesondere von maximal 7,5°, vorzugsweise von höchstens 5° und besonders vorteilhaft von maximal 2,5° aufweist. Unter einer "Haupterstreckungsrichtung" eines Objekts soll insbesondere eine Richtung verstanden werden, welche parallel zu einer längsten Kante eines kleinsten geometrischen Quaders ist, welcher das Objekt gerade noch vollständig umschließt.
Unter einer "Federklemme" soll in diesem Zusammenhang insbesondere eine mehr- oder einteilige Klemme mit wenigstens zwei, relativ zueinander federnd ausgebildeten Federarmen verstanden werden. Vorzugsweise ist die Federklemme einstückig ausgebildet und besteht besonders vorteilhaft aus einem Federstahl. Vorzugsweise sind die wenigstens zwei Federarme einander gegenüberstehend angeordnet, wobei insbesondere zwischen den wenigstens zwei Federarmen ein Aufnahmebereich für die zumindest eine Spleißeinheit gebildet ist. Insbesondere umgreift die zumindest eine Federklemme die zumindest eine Spleißeinheit im montierten Zustand wenigstens teilweise, insbesondere auf wenigstens zwei und vorzugsweise auf zumindest drei Seiten. Vorzugsweise weist die Federklemme zumindest abschnittsweise einen zumindest im Wesentlichen C- oder U-förmigen Querschnitt auf. Unter einem "zumindest im Wesentlichen C- oder U-förmigen Querschnitt" soll in diesem Zusammenhang insbesondere ein Querschnitt verstanden werden, welcher sich mit einem Flächenanteil von höchstens 40 %, insbesondere von maximal 30 %, vorzugsweise von höchstens 20 % und besonders vorteilhaft von maximal 10 % von einer C- oder U-Form unterscheidet. Darunter, dass die zumindest eine Federklemme "zur Fixierung der wenigstens zwei optischen Fasern in der zumindest einen Spleißeinheit" vorgesehen ist, soll insbesondere verstanden werden, dass die wenigstens zwei optischen Fasern bei hergestellter mechanischer Spleißung durch die Federkraft der zumindest einen Federklemme in der zumindest einen Spleißeinheit gehalten sind, insbesondere durch einen Reibschluss. Eine Fixierung der wenigstens zwei optischen Fasern kann dabei zwischen zumindest zwei Spleißelementen der zumindest einen Spleißeinheit erfolgen. Die Fixierung der wenigstens zwei optischen Fasern erfolgt zwischen einem Spleißelement der zumindest einen Spleißeinheit und der zumindest einen Federklemme, insbesondere wenigstens einem Federarm der zumindest einen Federklemme.
Unter einer "Spleißposition" soll insbesondere eine Position innerhalb der zumindest einen Spleißeinheit verstanden werden, an welcher wenigstens ein Ende einer optischen Faser bei hergestellter mechanischer Spleißung angeordnet ist. Unter einem "Betätigungselement" soll in diesem Zusammenhang insbesondere ein Element verstanden werden, welches mittelbar oder unmittelbar von einem Bediener betätigbar ist. Insbesondere ist das wenigstens eine Betätigungselement zu einem zumindest teilweise Öffnen der wenigstens einen Federklemme wenigstens teilweise in diese einschiebbar, insbesondere zwischen die wenigstens zwei Federarme der zumindest einen Federklemme. Besonders vorteilhaft ist das wenigstens eine Betätigungselement wenigstens teilweise zwischen wenigstens einen Federarm der zumindest einen Federklemme und wenigstens ein Spleißelement der zumindest einen Spleißeinheit einschiebbar, und zwar insbesondere derart, dass das wenigstens eine Betätigungselement beim zumindest teilweise Öffnen der zumindest einen Federklemme das wenigstens eine Spleißelement und/oder die zumindest eine Federklemme unmittelbar berührt. Vorzugsweise ist das wenigstens eine Betätigungselement zumindest teilweise als ein Keil ausgebildet. Unter einer "Schließstellung" der zumindest einen Federklemme soll in diesem Zusammenhang insbesondere ein Zustand der zumindest einen Federklemme bei hergestellter mechanischer Spleißung verstanden werden. Darunter, dass das wenigstens eine Betätigungselement in einem montierten Zustand und in einer Schließstellung der zumindest einen Federklemme "unverlierbar" ist, soll insbesondere verstanden werden, dass das wenigstens eine Bestätigungselement im montierten Zustand und in der Schließstellung auf beliebige Weise, insbesondere auch mittelbar, befestigt ist, und insbesondere von der übrigen Steckverbindervorrichtung untrennbar ausgebildet ist.

Durch eine solche Ausgestaltung kann eine Steckverbindervorrichtung bereitgestellt werden, welche vorteilhafte Eigenschaften hinsichtlich einer Konfektionierbarkeit wenigstens eines optischen Faserendes aufweist. Insbesondere kann ein Bedienkomfort dadurch gesteigert werden, dass ein Verlust des wenigstens einen Betätigungselements insbesondere in jeder Stellung der zumindest einen Federklemme wirksam vermieden werden kann.

Ferner wird vorgeschlagen, dass die Steckverbindervorrichtung eine Gehäuseeinheit und zumindest ein Bedienelement umfasst, mit welchem das wenigstens eine Betätigungselement im montierten Zustand in Wirkverbindung steht und welches von außerhalb der Gehäuseeinheit bedienbar ist. Unter einer "Gehäuseeinheit" soll in diesem Zusammenhang insbesondere eine Baueinheit verstanden werden, welche zumindest eine weitere Einheit der Steckverbindervorrichtung, insbesondere die zumindest eine Spleißeinheit, im montierten Zustand gegenüber einer Umgebung abdeckt und welche insbesondere mehrere Bauelemente umfassen kann. Vorzugsweise ist die Gehäuseeinheit zumindest im Wesentlichen geschlossen ausgebildet. Darunter, dass die Gehäuseeinheit "zumindest im Wesentlichen geschlossen" ausgebildet ist, soll insbesondere verstanden werden, dass die Gehäuseeinheit in einem montierten Zustand einen räumlichen Bereich umschließt und ein Gesamtflächeninhalt aller Ausnehmungen in einer Außenwand der Gehäuseeinheit insbesondere maximal 40 %, insbesondere höchstens 30 %, vorzugsweise maximal 20 % und besonders vorteilhaft höchstens 10 % eines Gesamtflächeninhalts der Außenwand der Gehäuseeinheit beträgt. Unter einem "Bedienelement" soll insbesondere ein Element verstanden werden, welches zum Zwecke einer Bedienung von einem Bediener anfassbar, insbesondere drückbar und/oder verschiebbar und/oder drehbar, ist. Darunter, dass das wenigstens eine Betätigungselement im montierten Zustand mit dem zumindest einen Bedienelement "in Wirkverbindung steht", soll insbesondere verstanden werden, dass das zumindest eine Bedienelement und das wenigstens eine Betätigungselement im montierten Zustand derart relativ zueinander angeordnet und/oder mittelbar oder unmittelbar miteinander verbunden sind, beispielsweise mittels einer Rast- und/oder Schraubverbindung, dass zumindest während einer Bedienung des zumindest einen Bedienelements durch einen Bediener zwischen dem zumindest einen Bedienelement und dem wenigstens einen Betätigungselement eine Kraftübertragung in wenigstens eine Richtung erfolgt. Hierdurch kann ein Bedienkomfort vorteilhaft gesteigert werden, insbesondere da für einen Bediener eine bequeme Zugänglichkeit erreicht werden kann.

In einer bevorzugten Ausgestaltung der Erfindung wird vorgeschlagen, dass das wenigstens eine Betätigungselement einstückig mit dem zumindest einen Bedienelement ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Hierdurch kann eine Bauteileanzahl reduziert werden, wodurch letztendlich insbesondere Kosten reduziert werden können.

In einer besonders bevorzugten Ausgestaltung der Erfindung wird vorgeschlagen, dass das zumindest eine Bedienelement wenigstens teilweise als ein Gehäuseelement der Gehäuseeinheit ausgebildet ist. Unter einem "Gehäuseelement" der Gehäuseeinheit soll in diesem Zusammenhang insbesondere ein Element der Gehäuseeinheit verstanden werden, welches im montierten Zustand zumindest bei hergestellter mechanischer Spleißung wenigstens teilweise eine Außenwand der Gehäuseeinheit bildet. Hierdurch kann eine Vereinfachung einer Konstruktion erreicht werden. Ferner kann eine vorteilhafte Bedienbarkeit erreicht werden.

Vorteilhaft ist das zumindest eine Bedienelement als ein Verschiebeteil ausgebildet, welches im montierten Zustand relativ zu wenigstens einem Element der Gehäuseeinheit verschiebbar ausgebildet ist. Bei dem wenigstens einen Element der Gehäuseeinheit handelt es sich insbesondere um ein Element, welches von dem Gehäuseelement verschieden ist. Unter einem "Verschiebeteil" soll in diesem Zusammenhang insbesondere ein Teil der Steckverbindervorrichtung verstanden werden, welches im montierten Zustand relativ zu wenigstens einem weiteren Bauteil der Steckverbindervorrichtung entlang einer Verschieberichtung translatorisch verschiebbar ist, wobei eine derartige Verschiebung insbesondere ein Herstellen und/oder Aufheben der mechanischen Spleißung nach sich zieht. Hierdurch kann eine besonders vorteilhafte Bedienbarkeit erreicht werden. Ferner können eine vorteilhaft einfache Kraftübertragung und insbesondere ein geradliniger Kraftfluss auf die zumindest eine Federklemme erreicht werden.

Ferner wird vorgeschlagen, dass eine Verschieberichtung des Verschiebeteils und eine Haupterstreckungsrichtung der zumindest einen Spleißeinheit zueinander unter einem Winkel von mehr als 0° und weniger als 180° angeordnet sind. Vorzugsweise sind die Verschieberichtung des Verschiebeteils und die Haupterstreckungsrichtung der zumindest einen Spleißeinheit unter einem zumindest im Wesentlichen rechten Winkel zueinander angeordnet. Unter einem "zumindest im Wesentlichen rechten Winkel" soll insbesondere ein Winkel verstanden werden, welcher maximal um 10°, insbesondere höchstens um 5° und besonders vorteilhaft maximal um 2° von einem rechten Winkel abweicht. Hierdurch kann eine vorteilhaft einfache Konstruktion erreicht werden.
Wenn das wenigstens eine Betätigungselement zumindest ein Verriegelungselement umfasst, welches dazu vorgesehen ist, das wenigstens eine Betätigungselement in einer geöffneten Position der zumindest einen Federklemme zu verriegeln, kann ein unbeabsichtigtes Schließen der zumindest einen Federklemme verhindert werden, insbesondere während eines Einführens eines zu konfektionierenden Faserendes in die zumindest eine Spleißeinheit. Unter einem "Verriegelungselement" soll in diesem Zusammenhang insbesondere ein Element verstanden werden, welches in einem verriegelten Zustand eine Bewegungsfreiheit in zumindest eine Richtung wenigstens teilweise einschränkt. Vorzugsweise umfasst die die Gehäuseeinheit und/oder vorzugsweise die zumindest eine Spleißeinheit wenigstens ein weiteres von dem Gehäuseelement verschiedenes Element, mit welchem das zumindest eine Verriegelungselement in der geöffneten Position der zumindest einen Federklemme verriegelt ist. Darunter, dass das zumindest eine Verriegelungselement dazu vorgesehen ist, das wenigstens eine Betätigungselement in einer geöffneten Position der zumindest einen Federklemme "zu verriegeln", soll insbesondere verstanden werden, dass das Verriegelungselement in der geöffneten Position der zumindest einen Federklemme einer Bewegung des wenigstens einen Betätigungselement, welche zu einem Schließen der zumindest einen Federklemme führen würde, zumindest einen Widerstand entgegensetzt.
In einer weiteren Ausgestaltung der Erfindung wird vorgeschlagen, dass das zumindest eine Verriegelungselement als ein Rastelement ausgebildet ist. Unter einem "Rastelement" soll insbesondere ein elastisches Element zur Herstellung einer Rastverbindung verstanden werden, welches dazu vorgesehen ist, während des Herstellens und/oder während des Aufhebens der mechanischen Spleißung elastisch ausgelenkt und/oder verformt zu werden und insbesondere nach dem Herstellen und/oder nach dem Aufheben der mechanischen Spleißung elastisch in eine Ausgangslage zurückzukehren. Hierdurch kann ein vorteilhaft einfaches Verriegelungselement bereitgestellt werden.

Vorteilhaft ist die zumindest eine Spleißeinheit einstückig ausgebildet. Demzufolge umfasst die Spleißeinheit vorzugsweise lediglich ein Spleißelement, wobei bei hergestellter mechanischer Spleißung eine Klemmung der wenigstens zwei optischen Fasern insbesondere zwischen dem Spleißelement und zumindest einem Arm der wenigstens einen Federklemme stattfindet. Hierdurch kann eine besonders vorteilhafte Vereinfachung einer Konstruktion erzielt werden. Ferner können damit einhergehend ein Bauraumbedarf, eine Bauteilevielfalt und Kosten reduziert werden.

Ferner wird ein Verfahren zur Montage einer erfindungsgemäßen Steckverbindervorrichtung vorgeschlagen. Zumindest eine optische Faser, insbesondere ein Faserstummel, wird mit wenigstens einer Ferrule vorkonfektioniert. Die wenigstens eine Ferrule wird mit zumindest einem Spleißelement der zumindest einen Spleißeinheit verklebt, und zwar insbesondere derart, dass die zumindest eine optische Faser in der wenigstens einen Faserführungsstruktur der zumindest einen Spleißeinheit angeordnet ist. Zusätzlich kann Index-Matching-Gel in die Faserführungsstruktur eingebracht werden. Anschließend wird die zumindest eine Federklemme um die zumindest eine Spleißeinheit herum angeordnet, so dass die zumindest eine optische Faser in der wenigstens einen Faserführungsstruktur fixiert ist. Das zumindest eine Bedienelement wird in ein vorderes Gehäuseteil der Gehäuseeinheit eingeführt. Anschließend wird die zumindest eine Spleißeinheit zusammen mit der vormontierten zumindest einen Federklemme und der vormontierten und vorkonfektionierten zumindest einen optischen Faser mit der zumindest einen Ferrule voran in das vordere Gehäuseteil und insbesondere in einen Wirkbereich des zumindest einen Bedienelements eingeführt. Anschließend wird ein hinteres Gehäuseteil der Gehäuseeinheit aufgeschoben und insbesondere mit dem vorderen Gehäuseteil verrastet. Durch ein derartiges Verfahren kann eine vorteilhaft einfache und schnelle Montage einer erfindungsgemäßen Steckverbindervorrichtung erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen feldkonfektionierbaren optischen Steckverbinder mit einer erfindungsgemäßen Steckverbindervorrichtung in einem montierten Zustand,
- Fig. 2: einen Teil der Steckverbindervorrichtung mit einem als Gehäuseelement ausgebildetes Betätigungselement und ein zu konfektionierendes Faserende in einer Explosionsdarstellung,
- Fig. 3: das Betätigungselement in einer ersten Ansicht,
- Fig. 4: das Betätigungselement in einer zweiten Ansicht,
- Fig. 5: die Steckverbindervorrichtung bei hergestellter mechanischer Spleißung in einer Schnittdarstellung und
- Fig. 6: die Steckverbindervorrichtung bei aufgehobener mechanischer Spleißung in einer Schnittdarstellung.

### Beschreibung des Ausführungsbeispiels

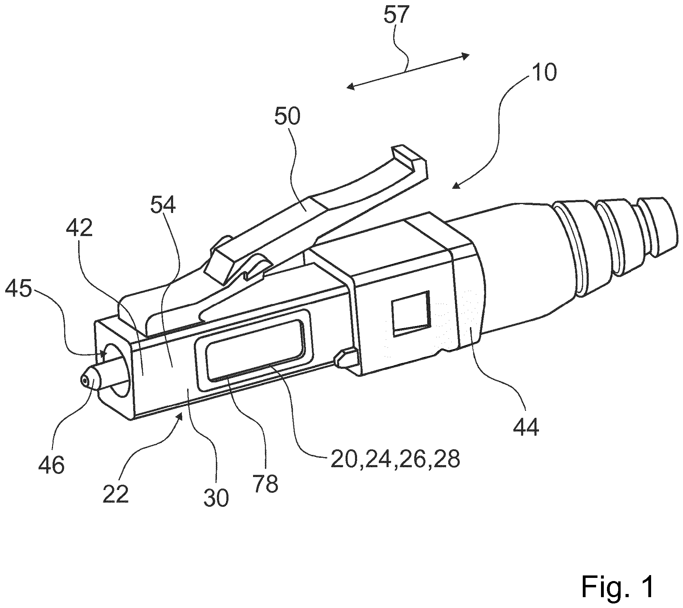

Figur 1 zeigt einen feldkonfektionierbaren optischen Steckverbinder 10 in einem montierten Zustand. Der Steckverbinder 10 ist als ein LC-Steckverbinder ausgebildet. Der Steckverbinder 10 umfasst eine erfindungsgemäße Steckverbindervorrichtung. Die Steckverbindervorrichtung umfasst eine Gehäuseeinheit 22 mit einem vorderen Gehäuseteil 42 und einem hinteren Gehäuseteil 44. Die beiden Gehäuseteile 42, 44 sind über eine Rastverbindung miteinander verbunden. Das vordere Gehäuseteil 42 weist in bekannter Weise eine Aufnahme 45 für eine Ferrule 46 auf. Am vorderen Gehäuseteil 42 ist ferner eine Rastklinke 50 angeformt, welche zu einer Verrastung in einer zum Steckverbinder 10 korrespondierenden Steckbuchse (nicht dargestellt) vorgesehen ist. Die Steckverbindervorrichtung umfasst ferner ein Betätigungselement 20, mit dessen Hilfe ein Bediener, wie im Folgenden noch dargelegt, eine mechanische Spleißung mit einer zu konfektionierenden optischen Faser herstellen oder aufheben kann. Das Betätigungselement 20 ist einstückig mit einem vom Bediener anfassbaren und im montierten Zustand von außerhalb der Gehäuseeinheit 22 bedienbaren Bedienelement 24 ausgeführt. Somit stehen das Betätigungselement 20 und das Bedienelement 24 im montierten Zustand miteinander in Wirkverbindung. Das Bedienelement 24 ist als ein Gehäuseelement 26 ausgebildet. Bei hergestellter mechanischer Spleißung schließt das Gehäuseelement 26 auf wenigstens einer Außenseite bündig mit der Gehäuseeinheit 22, insbesondere mit dem vorderen Gehäuseteil 42, ab.

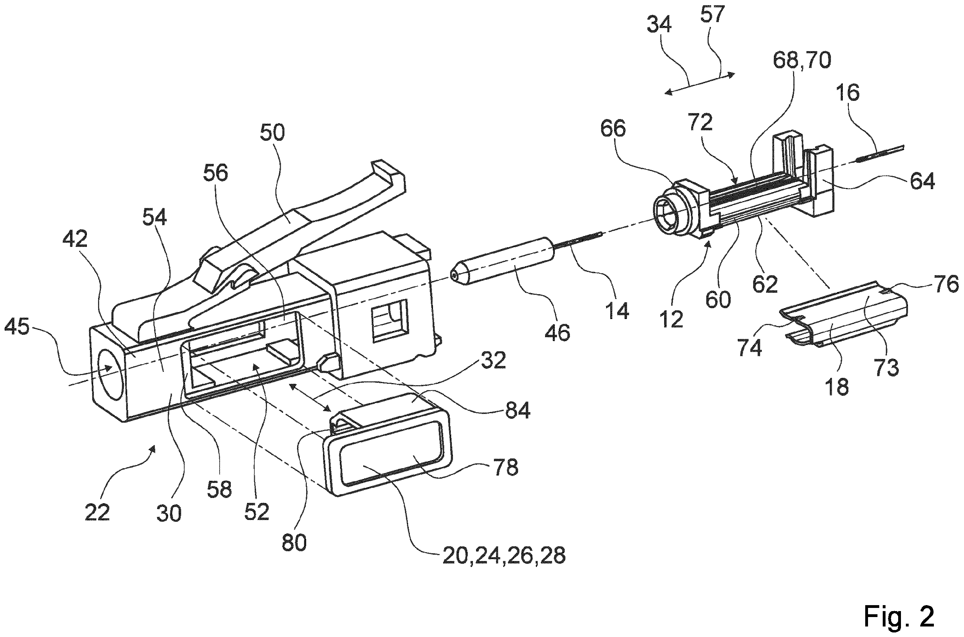

Figur 2 zeigt einen Teil der Steckverbindervorrichtung und eine zu konfektionierende optische Faser 16 in einer Explosionsdarstellung. Das vordere Gehäuseteil 42 weist einen Aufnahmebereich 52 für das Betätigungselement 20 auf. Der Aufnahmebereich 52 erstreckt sich quer durch das vordere Gehäuseteil 42 und durchdringt insbesondere zwei gegenüberliegende Seitenwände 54, 56 des vorderen Gehäuseteils 42. Das Bedienelement 24 ist im montierten Zustand zumindest teilweise im Aufnahmebereich 52 angeordnet. Das Bedienelement 24 ist als eine Verschiebeteil 28 ausgebildet, welches im montierten Zustand relativ zu wenigstens einem Element 30 der Gehäuseeinheit 22, und zwar relativ zum vorderen Gehäuseteil 42, verschiebbar ausgebildet ist. Eine Verschieberichtung 32 des Verschiebeteils 28 ist senkrecht zu einer Haupterstreckungsrichtung 57 der Gehäuseeinheit 22 angeordnet. Eine der Seitenwände 54 umfasst einen verjüngten und zurückgesetzten Bereich, welcher einen Anschlag 58 für das Betätigungselement 20 bildet.

Die Steckverbindervorrichtung umfasst eine optische Faser 14, welche als Faserstummel ausgebildet und mit der Ferrule 46 vorkonfektioniert ist. Insbesondere findet eine Vorkonfektionierung unter kontrollierten Bedingungen und durch Fachpersonal statt.

Die Steckverbindervorrichtung weist eine Spleißeinheit 12 auf, welche dazu vorgesehen ist, eine mechanische Spleißung der vorkonfektionierten optischen Faser 14 mit der zu konfektionierenden optischen Faser 16 herzustellen. Die Spleißeinheit 12 ist einstückig als ein Spleißelement 60 ausgebildet. Die Spleißeinheit 12 weist eine Haupterstreckungsrichtung 34 auf, welche im montierten Zustand parallel zur Haupterstreckungsrichtung 57 der Gehäuseeinheit 22 angeordnet ist. Demzufolge sind die Verschieberichtung 32 des Verschiebeteils 28 und die Haupterstreckungsrichtung 34 der Spleißeinheit 12 zueinander unter einem Winkel von 90° angeordnet. Das Spleißelement 60 umfasst ein Mittelstück 62, welches zumindest im Wesentlichen quaderförmig ausgebildet ist. An das Mittelstück 62 schließt sich an einem ersten Ende ein Kontaktelement 64 des Spleißelements 60 an, welches zu einer Kontaktierung mit weiteren Komponenten des Steckverbinders 10 vorgesehen ist (nicht dargestellt). Das Spleißelement 60 weist ferner eine Ferrulenaufnahme 66 auf, welches an einem zweiten Ende des Mittelstücks 62 anschließt und zur Aufnahme der Ferrule 46 vorgesehen ist. Im montierten Zustand ist die Ferrule 46 in der Ferrulenaufnahme 66 festgeklebt, wobei sich die vorkonfektionierte optische Faser 14 in eine Faserführungsstruktur 68 des Mittelstücks 62 hinein erstreckt. Die Faserführungsstruktur 68 ist als eine Nut 70 ausgebildet. Die Nut 70 erstreckt sich entlang des gesamten Mittelstücks 62. Die Nut 70 weist in einem mittleren Bereich einen dreieckförmigen Querschnitt auf. Die Nut 70 weist an beiden Enden des Mittelstücks 62 jeweils einen sich trichterförmig erweiternden Bereich auf, wobei in Figur 2 lediglich einer dieser Bereiche sichtbar ist. Diese sind zur Vereinfachung einer Einführung der optischen Fasern 14, 16 vorgesehen. Die optische Faser 14 erstreckt sich innerhalb der Nut 70 etwa bis zu einer Mitte 72 des Mittelstücks 62. Zur Herstellung der mechanischen Spleißung wird die zu konfektionierende optische Faser 16 von der anderen Seite der Nut 70 her in diese eingeschoben, bis beide optischen Fasern 14, 16 etwa in der Mitte 72 aneinander anstehen. Zusätzlich ist Index-Matching-Gel in die Nut 70 eingebracht, um optische Verluste im Bereich der mechanischen Spleißung zu verringern.

Die Spleißvorrichtung umfasst ferner eine Federklemme 18 zur Fixierung der zwei optischen Fasern 14, 16 in der Spleißeinheit 12 in einer Spleißposition durch eine Federkraft. Die Federklemme 18 weist einen zumindest im Wesentlichen U-förmigen Querschnitt auf. Die Federklemme 18 passt unter Vorspannung über das Mittelstück 62. Im montierten Zustand umgreift die Federklemme 18 das Mittelstück 62, insbesondere auf drei Seiten. Die Federklemme 18 drückt mit einem Federarm 73 unmittelbar auf die in der Faserführungsstruktur 68 angeordneten optischen Fasern 14, 16, wodurch diese in ihrer jeweiligen Position innerhalb der Faserführungsstruktur 68 fixiert sind. Der Federarm 73 weist an beiden Enden in Bereichen, welche sich im montierten Zustand oberhalb der trichterförmig erweiternden Bereiche befinden, jeweils eine trichterförmige Einführhilfe 74, 76 auf, welche ebenfalls zur Vereinfachung einer Einführung der optischen Fasern 14, 16 vorgesehen sind.

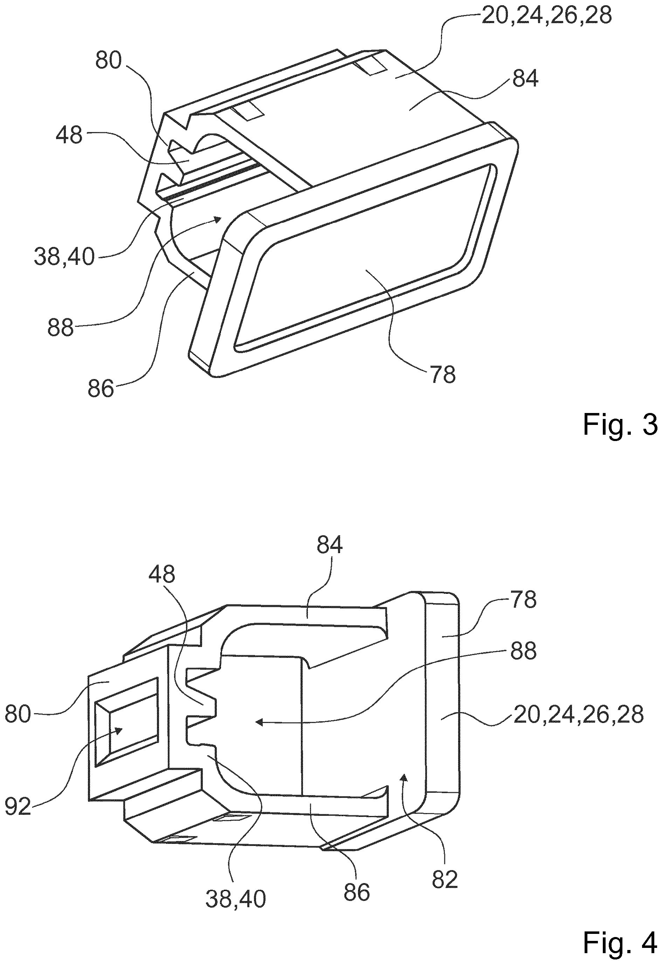

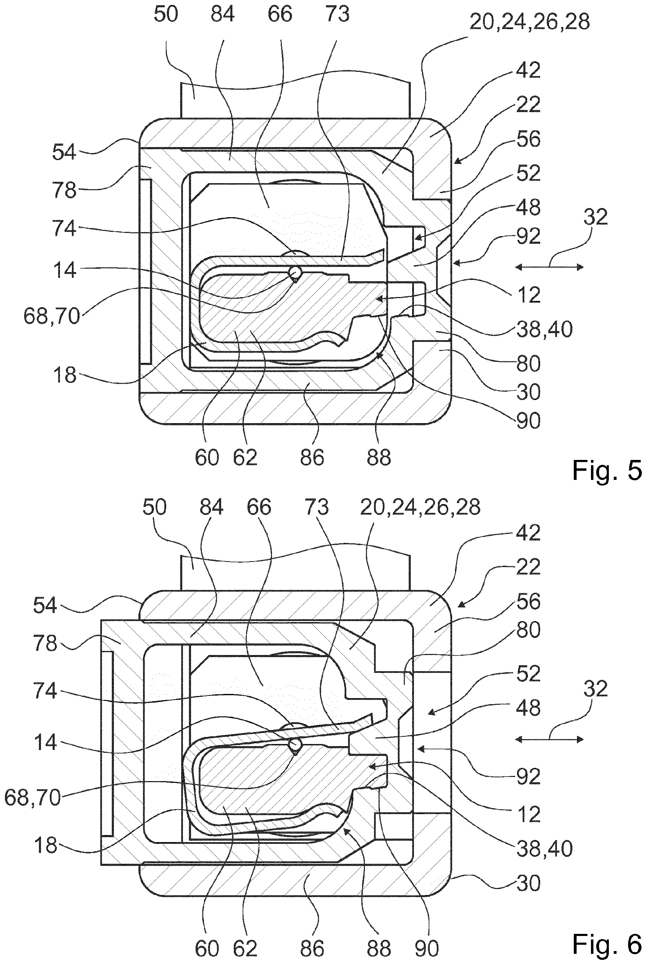

Figuren 3 und 4 zeigen zwei verschiedene Ansichten des Betätigungselements 20. Das Betätigungselement 20 ist einstückig aus Kunststoff hergestellt. Das Betätigungselement 20 umfasst ein erstes Bedienteil 78 und ein zweites Bedienteil 80, welche von außerhalb der Gehäuseeinheit 22 durch den Bediener anfassbar sind. Die Bedienteile 78, 80 sind jeweils zumindest im Wesentlichen plattenartig ausgebildet. Haupterstreckungsebenen der Bedienteile 78, 80 sind zumindest im Wesentlichen parallel zueinander angeordnet. Die Haupterstreckungsebenen der Bedienteile 78, 80 sind zumindest im Wesentlichen senkrecht zur Verschieberichtung 32 angeordnet. Das Bedienteil 78 weist eine größere Längserstreckung als das Bedienteil 80 auf. Das Bedienteil 78 weist einen Bereich 82 auf, welcher im montierten Zustand und bei hergestellter mechanischer Spleißung den Anschlag 58 an der Seitenwand 54 kontaktiert (vgl. Figur 2). Der Bereich 82 steht über das Bedienteil 80 hinaussteht. Die Bedienteile 78, 80 sind über Stege 84, 86 miteinander verbunden. Haupterstreckungsebenen der Stege 84, 86 sind zumindest im Wesentlichen parallel zueinander angeordnet. Die Haupterstreckungsebenen der Bedienteile 78, 80 sind senkrecht zu den Haupterstreckungsebenen der Stege 84, 86 angeordnet. Zwischen den Bedienteilen 78, 80 und den Stegen 84, 86 ist ein Aufnahmebereich 88 für die Spleißeinheit 12 und die Federklemme 18 angeordnet. Der Aufnahmebereich 88 weist einen zumindest im Wesentlichen rechteckigen, insbesondere quadratischen, Querschnitt auf. Das Betätigungselement 20 weist einen Keil 48 auf, welcher zur Aufhebung der mechanischen Spleißung und insbesondere zu einem wenigstens teilweise Öffnen der Federklemme 18 zwischen das Spleißelement 60 und den Federarm 73 der Federklemme 18 einführbar ist (vgl. Figuren 5 und 6). Der Keil 48 weist ein verbreitertes, unmittelbar mit dem Bedienteil 80 verbundenes Ende und ein verjüngtes, in den Aufnahmebereich 88 hineinragendes Ende auf. Das Betätigungselement 20 weist ferner ein Verriegelungselement 38 auf, welches dazu vorgesehen ist, das Betätigungselement 20 in einer geöffneten Position der zumindest einen Federklemme 18 zu verriegeln. Das Verriegelungselement 38 ist als ein Rastelement 40, insbesondere als eine Rastnase, ausgebildet. Das Verriegelungselement 38 ist unmittelbar mit dem Bedienteil 80 verbunden.

Figuren 5 und 6 zeigen die Steckverbindervorrichtung jeweils in einer Schnittdarstellung mit Blick in Richtung eines vorderen Endes des Steckverbinders 10. Figur 5 zeigt die Steckverbindervorrichtung bei hergestellter mechanischer Spleißung. Figur 6 zeigt die Steckverbindervorrichtung bei aufgehobener mechanischer Spleißung. Das als Verschiebeteil 28 ausgebildete Betätigungselement 20 ist zwischen zwei Endpositionen verschiebbar, und zwar einer Verriegelungsposition gemäß Figur 5 und einer Entriegelungsposition gemäß Figur 6. In der Verriegelungsposition (vgl. Figur 5) des Betätigungselements 20 liegt dieses mit dem Bereich 82 des Bedienteils 78 am Anschlag 58 der Seitenwand 54 an (vgl. auch Figur 2). Die Federklemme 18 ist frei von äußeren Krafteinflüssen und fixiert die auf Anschlag eingeschobenen optischen Fasern 14, 16 in der Faserführungsstruktur 68. In der Entriegelungsposition (vgl. Figur 6) liegt das Betätigungselement 20 mit dem Bedienteil 80 an dem Spleißelement 60 an. Ferner ist das Betätigungselement 20 durch das Verriegelungselement 38 mit einem korrespondierenden Verriegelungselement 90 des Spleißelements 60 verriegelt. In der Entriegelungsposition ist der Keil 48 des Betätigungselements 20 zwischen den Federarm 73 der Federklemme 18 und das Spleißelement 60 gepresst, so dass die Federklemme 18 entgegen der Federkraft zumindest teilweise geöffnet ist, wodurch ein vergleichsweise einfaches Einführen bzw. Entfernen der optischen Faser 16 ermöglicht ist. Das Betätigungselement 20 ist im montierten Zustand und insbesondere auch in der Verriegelungsposition unverlierbar in der Gehäuseeinheit 22 gelagert.

Dadurch, dass die Bedienteile 78, 80 unterschiedlich groß ausgestaltet sind, wird einerseits eine bequeme Bedienbarkeit und andererseits einer unbeabsichtigten Aufhebung der mechanischen Spleißung entgegengewirkt. Zum Herstellen der mechanischen Spleißung ist bei geöffneter Federklemme 18 zunächst die optische Faser 16 durch das hintere Gehäuseteil 44 in die Faserführungsstruktur 68 des Spleißelements 60 einzuführen, bis die optische Faser 16 die optische Faser 14 innerhalb der Faserführungsstruktur 68 kontaktiert. Anschließend ist das Bedienteil 78 in das vordere Gehäuseteil 42 zu drücken (vgl. Figur 5). Das Bedienteil 78 ist von seiner Größe her derart ausgestaltet, dass eine bequeme Bedienbarkeit mit bloßen Händen möglich ist. Zum Aufheben der mechanischen Spleißung ist andererseits ein Drücken des kleineren Bedienteils 78 erforderlich (vgl. Figur 6). Dieses ist derart ausgestaltet, insbesondere mit einer zusätzlichen Einbuchtung 92, dass eine Bedienung lediglich mit Hilfe eines Werkzeugs, insbesondere eines Schraubenziehers, möglich ist.

Bei einer Montage des Steckverbinders 10 wird gemäß der Figur 2 zunächst die optische Faser 14 mit der Ferrule 46 vorkonfektioniert. Die Ferrule 46 wird anschließend in der Ferrulenaufnahme 66 des Spleißelements 60 verklebt, und zwar derart, dass die optische Faser 14 in der Faserführungsstruktur 68 des Spleißelements 60 angeordnet ist. Zusätzlich wird Index-Matching-Gel in die Faserführungsstruktur 68 eingebracht. Anschließend wird die Federklemme 18 um das Spleißelement 60 herum angeordnet, so dass die optische Faser 14 in der Faserführungsstruktur 68 fixiert ist. Anschließend werden weitere Komponenten des Steckverbinders 10, insbesondere eine Druckfeder, mit dem Kontaktelement 64 des Spleißelement 60 verbunden, insbesondere durch eine Rastverbindung. Das Betätigungselement 20 wird in das vordere Gehäuseteil 42 der Gehäuseeinheit 22 eingeführt. Anschließend wird das Spleißelement 60 zusammen mit der vormontierten Federklemme 18, der vormontierten und vorkonfektionierten optischen Faser 14 und den weiteren vormontierten Komponenten mit der Ferrule 46 voran in das vordere Gehäuseteil 42 und in den Aufnahmebereich 88 des Betätigungselements 20 eingeführt. Anschließend wird das hintere Gehäuseteil 44 der Gehäuseeinheit 22 aufgeschoben und mit dem vorderen Gehäuseteil 42 verrastet.

### Bezugszeichen

- 10: Steckverbinder
- 12: Spleißeinheit
- 14: Optische Faser
- 16: Optische Faser
- 18: Federklemme
- 20: Betätigungselement
- 22: Gehäuseeinheit
- 24: Bedienelement
- 26: Gehäuseelement
- 28: Verschiebeteil
- 30: Element
- 32: Verschieberichtung
- 34: Haupterstreckungsrichtung
- 38: Verriegelungselement
- 40: Rastelement
- 42: Vorderes Gehäuseteil
- 44: Hinteres Gehäuseteil
- 45: Aufnahme
- 46: Ferrule
- 48: Keil
- 50: Rastklinke
- 52: Aufnahmebereich
- 54: Seitenwand
- 56: Seitenwand
- 57: Haupterstreckungsrichtung
- 58: Anschlag
- 60: Spleißelement
- 62: Mittelstück
- 64: Kontaktelement
- 66: Ferrulenaufnahme
- 68: Faserführungsstruktur
- 70: Nut
- 72: Mitte
- 73: Federarm
- 74: Einführhilfe
- 76: Einführhilfe
- 78: Bedienteil
- 80: Bedienteil
- 82: Bereich
- 84: Steg
- 86: Steg
- 88: Aufnahmebereich
- 90: Verriegelungselement
- 92: Einbuchtung

## Patentansprüche

1. Steckverbindervorrichtung, insbesondere für einen feldkonfektionierbaren optischen Steckverbinder (10), mit zumindest einer Spleißeinheit (12), welche dazu vorgesehen ist, eine mechanische Spleißung wenigstens zweier optischer Fasern (14, 16) herzustellen, und mit zumindest einer Federklemme (18) zur Fixierung der wenigstens zwei optischen Fasern (14, 16) in der zumindest einen Spleißeinheit (12) in einer Spleißposition durch zumindest eine Federkraft, **gekennzeichnet durch** wenigstens ein in einem montierten Zustand und in einer Schließstellung der zumindest einen Federklemme (18) unverlierbares Betätigungselement (20), welches dazu vorgesehen ist, die zumindest eine Federklemme (18) entgegen der Federkraft wenigstens teilweise zu öffnen, wobei die Fixierung der wenigstens zwei optischen Fasern zwischen einem Spleißelement (60) der zumindest einen Spleißeinheit (12) und der zumindest einen Federklemme (18) erfolgt.

2. Steckverbindervorrichtung nach Anspruch 1, **gekennzeichnet durch** eine Gehäuseeinheit (22) und zumindest ein Bedienelement (24), mit welchem das wenigstens eine Betätigungselement (20) im montierten Zustand in Wirkverbindung steht und welches von außerhalb der Gehäuseeinheit (22) bedienbar ist.

3. Steckverbindervorrichtung nach Anspruch 2, **dadurch gekennzeichnet, dass** das wenigstens eine Betätigungselement (20) einstückig mit dem zumindest einen Bedienelement (24) ausgebildet ist.

4. Steckverbindervorrichtung nach Anspruch 2 oder 3, **dadurch gekennzeichnet, dass** das zumindest eine Bedienelement (24) wenigstens teilweise als ein Gehäuseelement (26) der Gehäuseeinheit (22) ausgebildet ist.

5. Steckverbindervorrichtung nach einem der Ansprüche 2 bis 4, **dadurch gekennzeichnet, dass** das zumindest eine Bedienelement (24) als ein Verschiebeteil (28) ausgebildet ist, welches im montierten Zustand relativ zu wenigstens einem Element (30) der Gehäuseeinheit (22) verschiebbar ausgebildet ist.

6. Steckverbindervorrichtung nach Anspruch 5, **dadurch gekennzeichnet, dass** eine Verschieberichtung (32) des Verschiebeteils (28) und eine Haupterstreckungsrichtung (34) der zumindest einen Spleißeinheit (12) zueinander unter einem Winkel von mehr als 0° und weniger als 180° angeordnet sind.

7. Steckverbindervorrichtung nach einem der vorhergehenden Ansprüche, **dadurch gekennzeichnet, dass** das wenigstens eine Betätigungselement (20) zumindest ein Verriegelungselement (38) umfasst, welches dazu vorgesehen ist, das wenigstens eine Betätigungselement (20) in einer geöffneten Position der zumindest einen Federklemme (18) zu verriegeln.

8. Steckverbindervorrichtung nach Anspruch 7, **dadurch gekennzeichnet, dass** das zumindest eine Verriegelungselement (38) als ein Rastelement (40) ausgebildet ist.

9. Steckverbindervorrichtung nach einem der vorhergehenden Ansprüche, **dadurch gekennzeichnet, dass** die zumindest eine Spleißeinheit (12) einstückig ausgebildet ist.

10. Verfahren zur Montage einer Steckverbindervorrichtung nach einem der vorhergehenden Ansprüche.

## Claims

1. Plug connector device, in particular for a field-configurable optical plug connector (10), with at least one splicing unit (12), which is provided to establish a mechanical splicing of at least two optical fibers (14, 16), and with at least one spring clamp (18) for fastening the at least two optical fibers (14, 16) in the at least one splicing unit (12) in a splicing position by at least one spring load, **characterised by** at least one actuation element (20), which is captive in a mounted state and in a closed position of the at least one spring clamp (18), and is provided to at least partially open the at least one spring clamp (18) counter to the spring load, wherein the fixation of the at least two optical fibers is effected between a splicing element (60) of the at least one splicing unit (12) and the at least one spring clamp (18).

2. Plug connector device according to claim 1, **characterised by** a housing unit (22) and at least one operating element (24) which the at least one actuation element (20) is in an operative connection with in a mounted state, and which is operable from outside the housing unit (22).

3. Plug connector device according to claim 2, **characterised in that** the at least one actuation element (20) is embodied in a one-part implementation with the at least one operating element (24).

4. Plug connector device according to claim 2 or 3, **characterised in that** the at least one operating element (24) is embodied at least partially as a housing element (26) of the housing unit (22).

5. Plug connector device according to one of claims 2 to 4, **characterised in that** the at least one operating element (24) is embodied as a slide part (28), which is implemented to be in a mounted state slideable with respect to at least one element (30) of the housing unit (22).

6. Plug connector device according to claim 5, **characterised in that** a sliding direction (32) of the slide part (28) and a main extension direction (34) of the at least one splicing unit (12) are arranged at an angle of more than 0° and less than 180° with respect to each other.

7. Plug connector device according to one of the preceding claims, **characterised in that** the at least one actuation element (20) comprises at least one locking element (38) which is provided to lock the at least one actuation element (20) in an open position of the at least one spring clamp (18).

8. Plug connector device according to claim 7, **characterised in that** the at least one locking element (38) is embodied as a latch element (40).

9. Plug connector device according to one of the preceding claims, **characterised in that** the at least one splicing unit (12) is embodied in a one-part implementation.

10. Method for an assembly of a plug connector device according to one of the preceding claims.

## Revendications

1. Dispositif de connecteur enfichable, notamment pour un connecteur enfichable optique (10), qui est confectionnable sur place, avec au moins une unité d'épissurage (12) prévue pour établir un épissurage mécanique d'au moins deux fibres optiques (14, 16), et avec au moins une pince à ressort (18) pour une fixation des au moins deux fibres optiques (14, 16) dans l'au moins une unité d'épissurage (12) en une position d'épissurage par le biais d'au moins une force ressort, **caractérisé par** au moins un élément d'actuation (20), qui est imperdable en état monté et dans une position de fermeture, et est prévu pour au moins partiellement ouvrir l'au moins une pince à ressort (18) contre à la force ressort, la fixation des au moins deux fibres optiques étant effectuée entre un élément d'épissurage (60) de l'au moins une unité d'épissurage (12) et l'au moins une pince à ressort (18).

2. Dispositif de connecteur enfichable selon la revendication 1, **caractérisé par** une unité boîtier (22) et au moins un élément d'opération (24), avec lequel l'au moins un élément d'actuation (20) est, en état monté, dans une connexion opératif, et lequel est opérable d'un dehors de l'unité boîtier (22).

3. Dispositif de connecteur enfichable selon la revendication 2, **caractérisé en ce que** l'au moins un élément d'actuation (20) est implémenté intégralement avec l'au moins un élément d'opération (24).

4. Dispositif de connecteur enfichable selon l'une quelconque des revendications 2 ou 3, **caractérisé en ce que** l'au moins un élément d'opération (24) est implémenté au moins partiellement comme élément de boîtier (26) de l'unité boîtier (22).

5. Dispositif de connecteur enfichable selon l'une quelconque des revendications 2 à 4, **caractérisé en ce que** l'au moins un élément d'opération (24) est implémenté comme part déplaçable (28), qui est réalisé de telle manière qu'elle est, en état monté, déplaçable par rapport à au moins un élément (30) de l'unité boîtier (22).

6. Dispositif de connecteur enfichable selon la revendication 5, **caractérisé en ce qu'**une direction de déplacement (32) de la part déplaçable (28) et une direction d'extension principale (34) de l'au moins une unité d'épissurage (12) sont disposées à un angle de supérieur à 0° et inférieur à 180° l'une par rapport à l'autre.

7. Dispositif de connecteur enfichable selon l'une quelconque des revendications précédentes, **caractérisé en ce que** l'au moins un élément d'actuation (20) comporte au moins un élément de verrouillage (38), qui est prévu à verrouiller l'au moins un élément d'actuation (20) en position ouverte de l'au moins une pince à ressort (18).

8. Dispositif de connecteur enfichable selon la revendication 7, **caractérisé en ce que** l'au moins un élément de verrouillage (38) est implémenté comme élément d'encliquetage (40).

9. Dispositif de connecteur enfichable selon l'une quelconque des revendications précédentes, **caractérisé en ce que** l'au moins une unité d'épissurage (12) est réalisé en une seule pièce.

10. Procédé pour un montage d'un dispositif de connecteur enfichable selon l'une quelconque des revendications précédentes.
